# EUROPÄISCHE PATENTSCHRIFT

(11) **EP 2 065 673 B1**
(45) Veröffentlichungstag und Bekanntmachung des Hinweises auf die Patenterteilung: **09.12.2015**
(21) Anmeldenummer: 08168698.2
(22) Anmeldetag: 10.11.2008
(51) Int. Cl.: G01B 3/56, G01B 5/24, B27G 5/02

(54) **Schmiege**
Bevel
Sauterelle

(30) Priorität: 27.11.2007 DE 202007016558 U
(43) Veröffentlichungstag der Anmeldung: 03.06.2009
(73) Patentinhaber: wolfcraft GmbH, 56746 Kempenich (DE)
(72) Erfinder: Degen, Klemens, 56745, Weibern (DE)
(74) Vertreter: Grundmann, Dirk

(56) Entgegenhaltungen:
- FR-A- 2 817 892
- GB-A- 1 070 827

## Beschreibung

Die Erfindung betrifft eine zwei miteinander mit einem Getriebe gekoppelte, insbesondere mit ineinandergreifenden Zahnsegmentabschnitten und deswegen synchron und spiegelsymmetrisch zueinander um je eine, einen Ausrichter aufweisenden Lagerträger zugeordnete Lagerachsen drehbare Schenkel aufweisende Schmiege.

Eine derartige Schmiege ist aus der GB 2 248 505 A vorbekannt. Die Schmiege besteht aus zwei Schenkeln, die jeweils um eine eigene Lagerachse schwenkbar an einem Lagerträger gelagert sind. Jeder der beiden Schenkel bildet einen Zahnsegmentabschnitt aus. Die Zähne der beiden Zahnsegmentabschnitte greifen derart ineinander, dass sich die beiden Schenkel in verschiedene Winkelstellungen zueinander verschwenken können. Der Lagerträger trägt einen Ausrichter, der jeweils winkelhalbierend zum Schenkelwinkel ausgerichtet ist. Mit diesem Ausrichter können Schnittlinien oder dergleichen an einem Werkstück angerissen werden, um Gehrungen zu schneiden, deren Winkel dem Winkel der beiden Schenkel entspricht.

Eine ähnliche Vorrichtung, jedoch ohne Zahnineinandergriff beschreibt die US 6,401,584 B1. Auch hier ist ein Ausrichter vorgesehen, dessen Position immer entlang der Winkelhalbierenden verbleibt.

Die US 2004/0000064 A1 beschreibt eine Schmiege, bei der die Winkelhalbierende über ein Hebelgetriebe eingestellt wird.

Die DE 600 12 325 T2 beschreibt eine Gehrlade mit zwei zueinander verschwenkbaren Schenkeln, wobei die Gelenkachse eine Verzahnung trägt, die in eine Verzahnung eines Abtriebsrades eingreift. Die Achse des Abtriebszahnrades trägt einen Ausrichter, der sich in Richtung einer Winkelhalbierenden ausrichtet.

FR 2 817 892 beschreibt eine Schmiege mit zwei über Getriebe verbundenen Schenkeln mit je einer Auflagefläche. Ein sich längs der Winkelhalbierenden einstellender Ausrichter führt das Blatt einer Kappsäge durch einen Schlitz in einem senkrecht zu den Auflageflächen abragenden Steg.

Der Erfindung liegt die Aufgabe zugrunde, die gattungsgemäße Schmiege gebrauchsvorteilhaft weiterzubilden.

Gelöst wird die Aufgabe durch die im unabhängigen Anspruch 1 angegebene Erfindung, wobei vorteilhafte Ausgestaltungen in den abhängigen Ansprüchen zu finden sind.

Dabei ist unter anderem vorgesehen, dass der Ausrichter einen Magneten und ihm benachbarte Sockel trägt. Dabei ist die Breitseitenfläche des Magneten so ausgerichtet, dass sie entlang der Winkelhalbierenden des Schenkelwinkels verläuft. Der Magnet kann an ein Sägeblatt einer Kappsäge angeheftet werden. Dies hat zur Folge, dass das Sägeblatt parallel zur Winkelhalbierenden ausgerichtet ist. Mit einer derart an das Sägeblatt einer Kappsäge angehefteten Schmiege kann die Winkelposition der Kappsäge gegenüber der Werkstückanlage genau eingestellt werden. Um zu vermeiden, dass sich die Schenkel während des Einstellens oder nach dem Einstellen des Winkels wieder verstellen, kann eine Feststellvorrichtung vorgesehen sein. Die Feststellvorrichtung kann einer Lagerachse zugeordnet sein. Sie kann eine Klemmschraube aufweisen. Der Lagerträger kann ein zwei Achsstummel tragendes Basisteil und einen den Anzeiger tragendes Oberteil aufweisen. Das Oberteil kann mit einer Skala versehen sein. Die Skala kann einem Skalenträger zugeordnet sein. In einem oder in beiden Schenkeln können Anschlagleisten angeordnet sein. Die Unterseite der Schenkel bilden Auflageflächen, mit denen die Schenkel auf ein Werkstück aufgelegt werden können. Aus der Auflagefläche können die Anschlagleisten ausgefahren werden, um gegen eine Seitenkante eines Werkstücks gelegt zu werden, so dass sich der zugehörige Schenkel parallel zur Seitenkante ausrichtet. Der andere Schenkel kann dann in eine beliebige Winkelstellung verschwenkt werden und mittels der Feststellvorrichtung in dieser Winkelstellung gehalten werden. Der Träger bzw. die durch den Magneten definierte Ebene liegt dann in der Winkelhalbierenden der beiden Winkel. Sollen zwei Werkstücke auf Gehrung miteinander verbunden werden, so werden die beiden Werkstücke zunächst in die erforderliche Winkellage gebracht. Die Schmiege wird dann derart an die Randkanten der beiden Werkstücke gebracht, dass die Schenkel parallel zu den Randkanten verlaufen. Dann wird die Winkelstellung mit der Feststellvorrichtung fixiert.

Ein Ausführungsbeispiel der Erfindung wird nachfolgend anhand beigefügter Zeichnungen erläutert. Es zeigen:

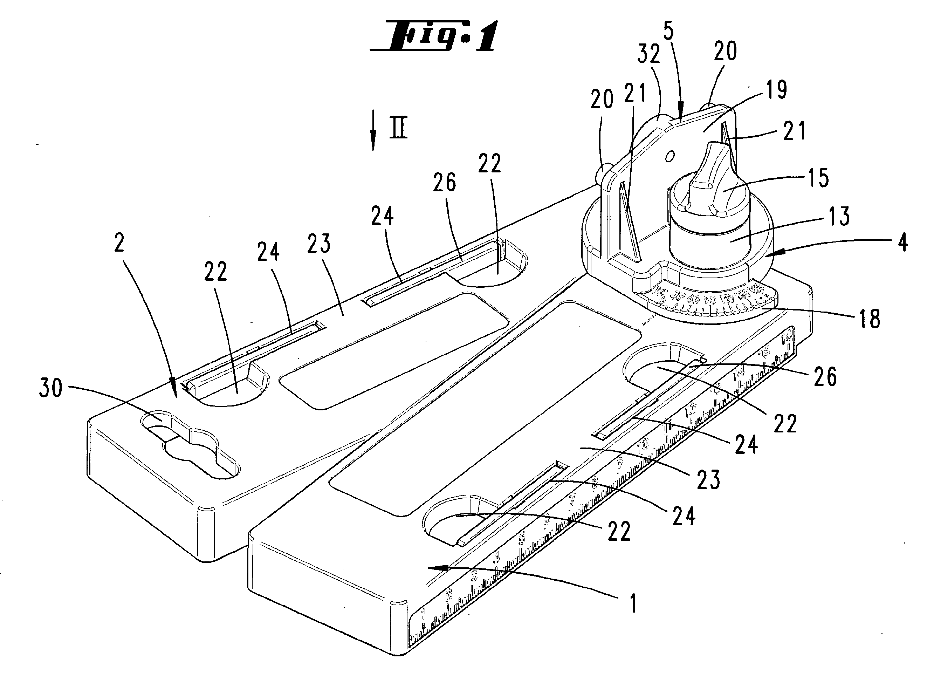

- Fig. 1: eine perspektivische Ansicht in einer 15°-Grad-Geschlossenstellung der beiden Schenkel,

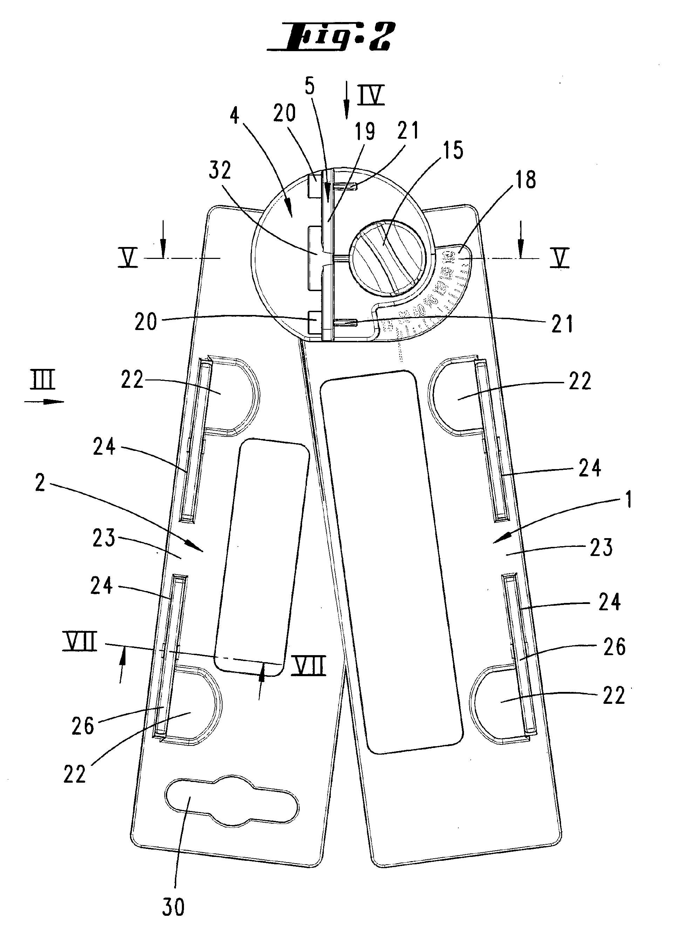

- Fig. 2: die Draufsicht auf die Vorrichtung der 15°-Geschlossenstellung,
- Fig. 3: eine Seitenansicht,

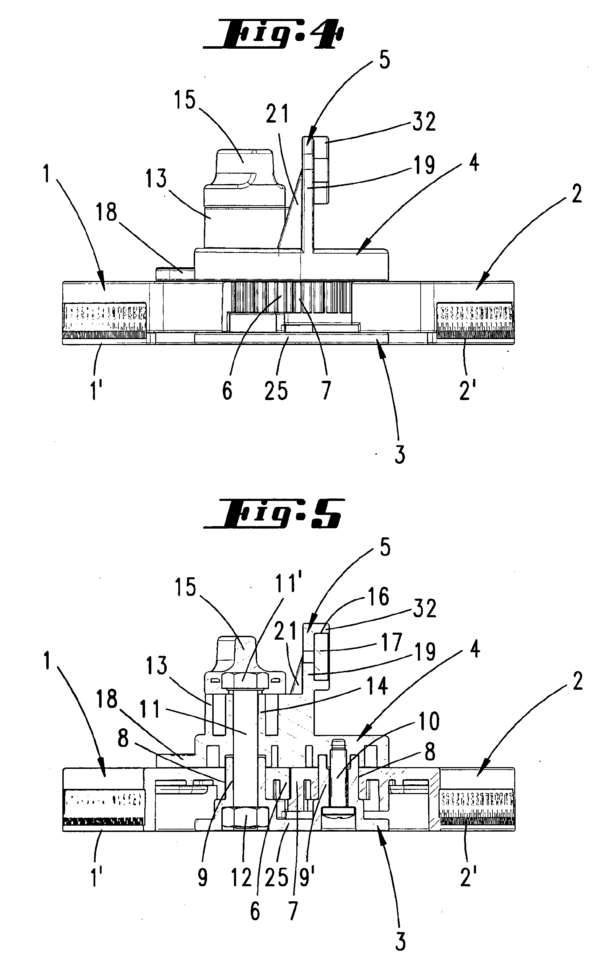

- Fig. 4: eine Ansicht gemäß Pfeil IV in Fig. 2,
- Fig. 5: einen Schnitt gemäß der Linie V-V in Fig. 2,

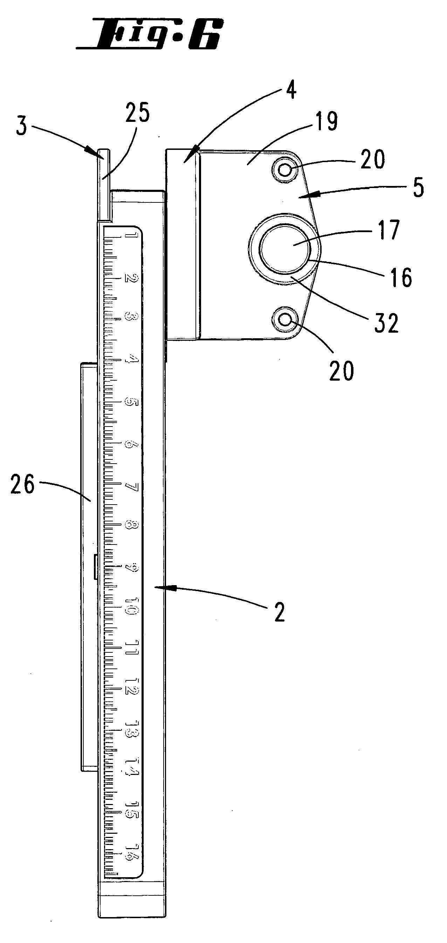

- Fig. 6: eine Ansicht gemäß Fig. 3, jedoch mit aus der Anlagefläche ausgefahrener Anschlagleiste,
- Fig. 7: einen Schnitt gemäß der Linie VII-VII in Fig. 2 mit eingefahrener Anschlagleiste,
- Fig. 8: eine Darstellung gemäß Fig. 7 mit ausgefahrener Anschlagleiste,

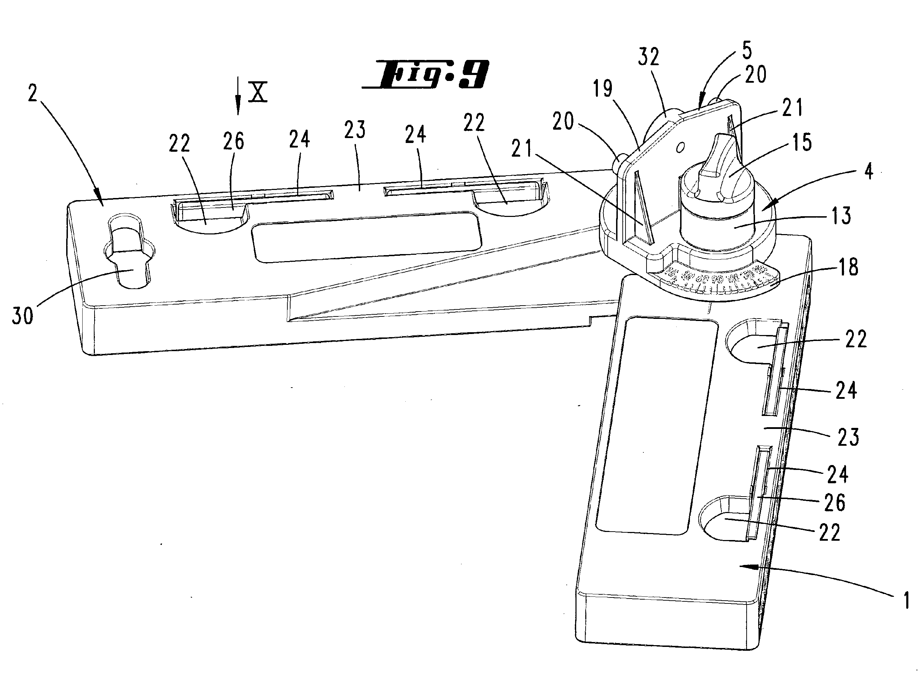

- Fig. 9: eine Darstellung gemäß Fig. 1 in einer 80°-Winkelstellung,

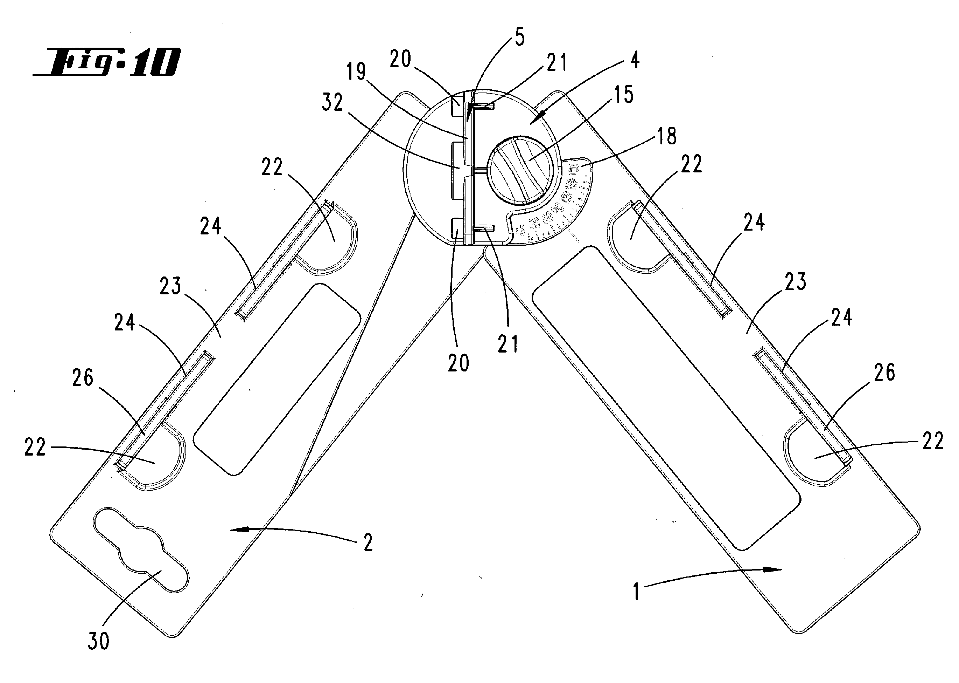

- Fig. 10: die 80°-Winkelstellung in der Draufsicht,

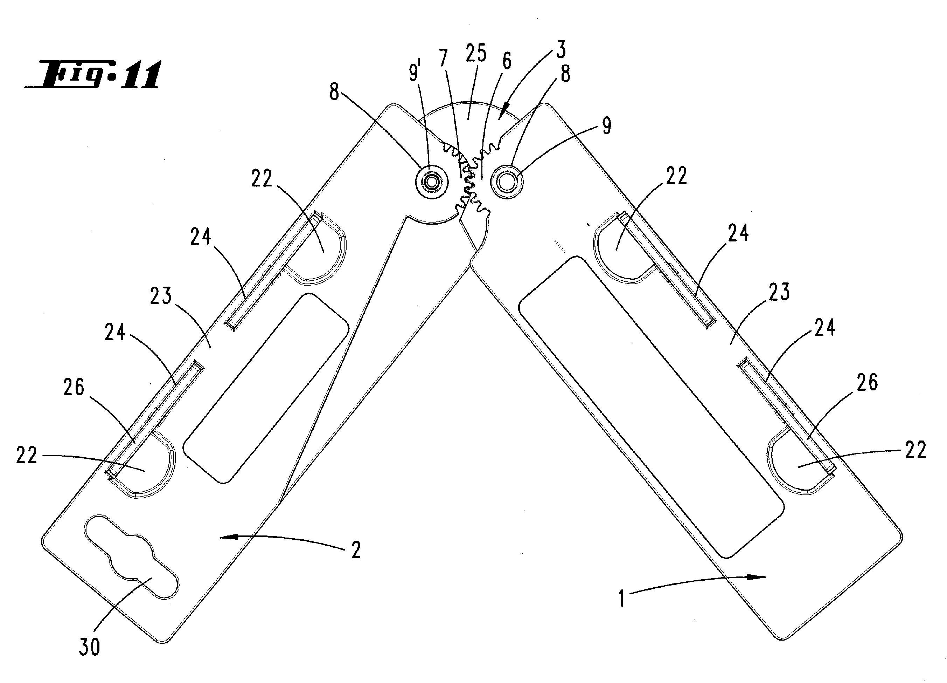

- Fig. 11: die Vorrichtung in der 80°-Winkelstellung, jedoch mit abgenommenem Lagerträger-Oberteil,

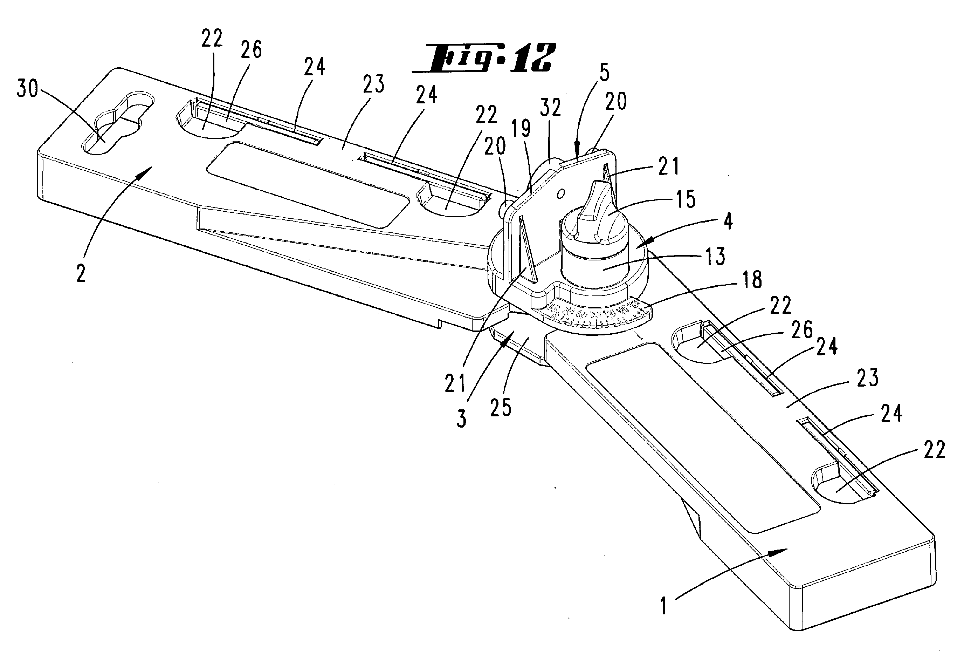

- Fig. 12: eine 170°-Stellung der Schenkel,
- Fig. 13: die Schmiege in einer Winkelstellung mit an ein Sägeblatt 31 angehefteten Magneten, und

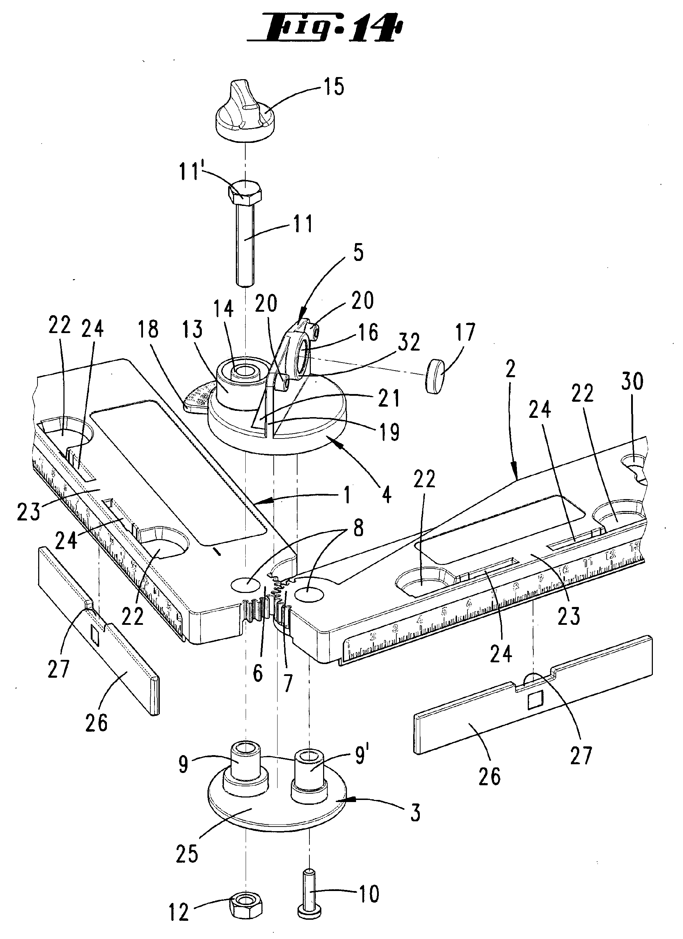

- Fig. 14: eine Explosionsdarstellung der Bestandteile der Vorrichtung.

Die in den Zeichnungen dargestellte Schmiege besitzt einen ersten Schenkel 1 und einen zweiten Schenkel 2. Jeder der beiden Schenkel 1, 2 besitzt ein Zahnsegment 6, 7. Das Zahnsegment 6 des ersten Schenkels 1 besitzt Zähne, die in die Zahnlücken des Zahnsegmentes 7 des zweiten Schenkels 2 eingreifen. Die Zähne der beiden Zahnsegmente 6, 7 sind kreisbogenförmig um ein Zentrum angeordnet, welches von zwei Lageröffnungen 8 ausgebildet ist. In den Lageröffnungen 8 stecken jeweils Lagerzapfen 9, 9', die von einer Basisplatte 25 eines Lagerträger-Basisteiles 3 abragen. Die Basisplatte 25 liegt im zusammengebauten Zustand in einer Höhlung im Gelenkbereich der beiden Schenkel 1, 2, so dass die Auflageflächen 1' bzw. 2' der beiden Schenkel 1, 2 auf eine ebene Werkstückfläche auflegbar sind.

Die Lagerzapfen 9 durchragen bereichsweise die Lageröffnungen 8, so dass sie mit ihren Endabschnitten aus der nach oben weisenden Breitseite der Schenkel 1, 2 geringfügig heraustreten. Diese aus den Breitseiten heraustretenden Abschnitte greifen in Aussparungen eines Lagerträgeroberteils 4 ein. Das Lagerträgeroberteil besitzt wie das Lagerträgerbasisteil 3 einen im Wesentlichen kreisrunden Grundriss.

In den Lagerzapfen 9' ist eine Befestigungsschraube 10 eingedreht, deren Gewinde in eine Gewindeöffnung des Lagerträgeroberteils 4 eingreift. Der andere Lagerzapfen 9 ist ebenfalls hohl ausgebildet. Die Höhlung des Lagerzapfens 9 fluchtet mit einer Höhlung eines Sockels 14 des Lagerträgeroberteils 4. Der im Wesentlichen kreisrunde Sockel 14 ist von einem Ringkragen 13 umgeben. Durch die beiden miteinander fluchtenden Bohrungen ist eine Spannschraube 11 gesteckt, deren Gewinde in eine Mutter 12 eingedreht ist. Die Mutter 12 befindet sich drehgesichert in einer Aussparung der Unterseite des Lagerträger-Basisteils 3. Der Kopf 11' der Spannschraube 11 steckt in einer Höhlung einer Griffhandhabe 15. Diese bildet einen Knebel aus, mit dem die Schraube 11 gedreht werden kann. Durch Drehen der Spannschrauben 11 wird der Zahnsegmentabschnitt des Schenkels 1 zwischen Lagerträgerbasisteil 3 und Lagerträgeroberteil 4 eingespannt. Hierdurch ist eine Feststelleinrichtung gegeben, mit der die Winkelstellung der beiden Schenkel 1, 2 fixierbar ist.

Diametral über das Lagerträgeroberteil 4 erstreckt sich ein Steg 19. Der Steg ragt im Wesentlichen senkrecht zur Auflagefläche 1', 2' vom Lagerträgeroberteil 4 ab und wird rückwärtig von mehreren Stützrippen 21 getragen. Auf der Frontseite des Steges 19 befindet sich eine kreisringförmige Erhöhung 32, die eine topfförmige Aussparung 16 ausbildet. Neben der topfförmigen Aussparung befinden sich zwei Sockel 20, deren Stirnflächen einen definierten Abstand zur Breitseitenwandung des einen Ausrichter 5 ausbildenden Steges 19 aufweist.

In der topfförmigen Aussparung 16 befindet sich ein Permanentmagnet 17. Der Permanentmagnet 17 kann dort im Klemmsitz gehalten sein. Er kann dort aber auch eingeklebt sein.

Der Rand des Lagerträgeroberteils 4 besitzt einen radial abragenden Skalenträger 18 mit einer Winkelskalierung.

Jeder der beiden Schenkel 1, 2 besitzt zwei voneinander beabstandete Aussparungen 22, die sich in Schlitze 24 fortsetzen, wobei die Schlitze 24 der beiden Aussparungen 22 aufeinander zu gerichtet sind und lediglich durch einen Steg 23 voneinander getrennt sind. Die Schlitze verlaufen parallel zur Seitenwandung der Schenkel 1, 2.

In dem Schlitz liegt jeweils eine Anschlagleiste 26. Die Anschlagleiste 26 besitzt eine mittlere Ausnehmung 27, die auf Höhe des Steges 23 liegt.

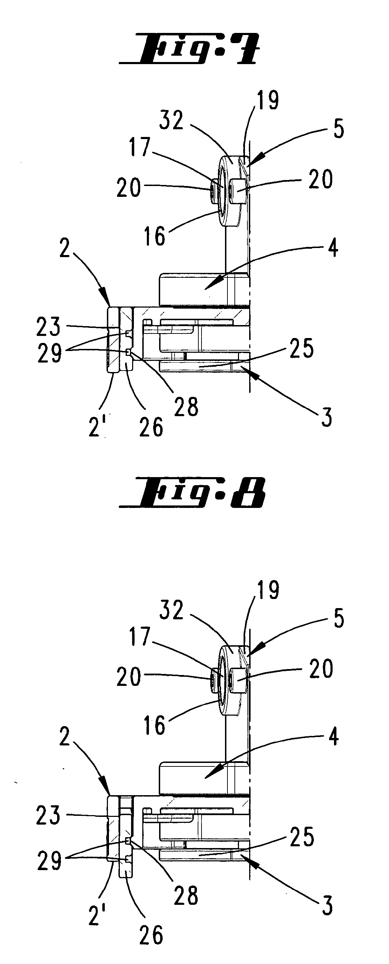

Wie aus der Fig. 7 zu entnehmen ist, wird die Anschlagleiste 26 mittels einer Rastnase 28, die in eine Rastaussparung 29 eingreift, in einer eingefahrenen Stellung in dem Schenkel 1 gehalten. Die Breite der Anschlagleiste 26 entspricht im Wesentlichen der Höhe des Schenkels 1.

Fig. 8 zeigt, dass die Anschlagleiste 26 aus der Auflageseite 2'des Schenkels 2 herausgefahren werden kann. Die Rastnase 28 greift dann in eine andere Rastaussparung 29 ein. Der aus der Auflagefläche 2' herausragende Abschnitt der Anschlagleiste 26 kann gegen eine Anlagekante eines Werkstücks gebracht werden, um den jeweiligen Schenkel 1, 2 in eine Parallellage zu dieser Kante auszurichten.

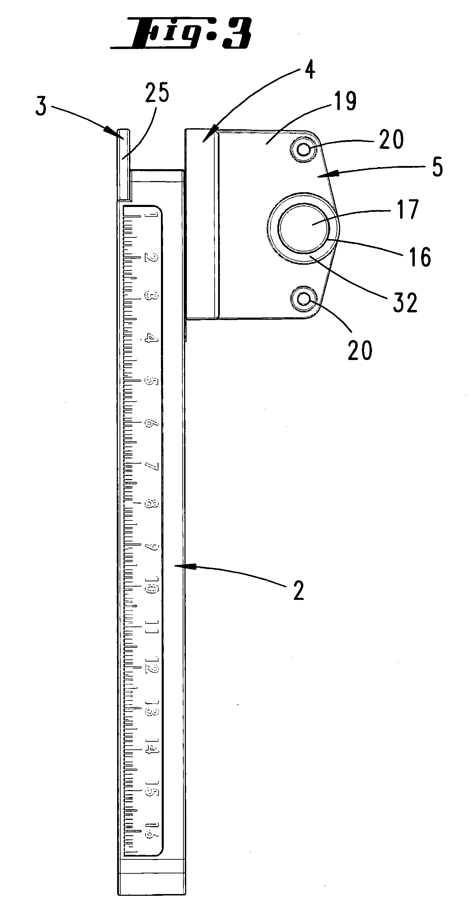

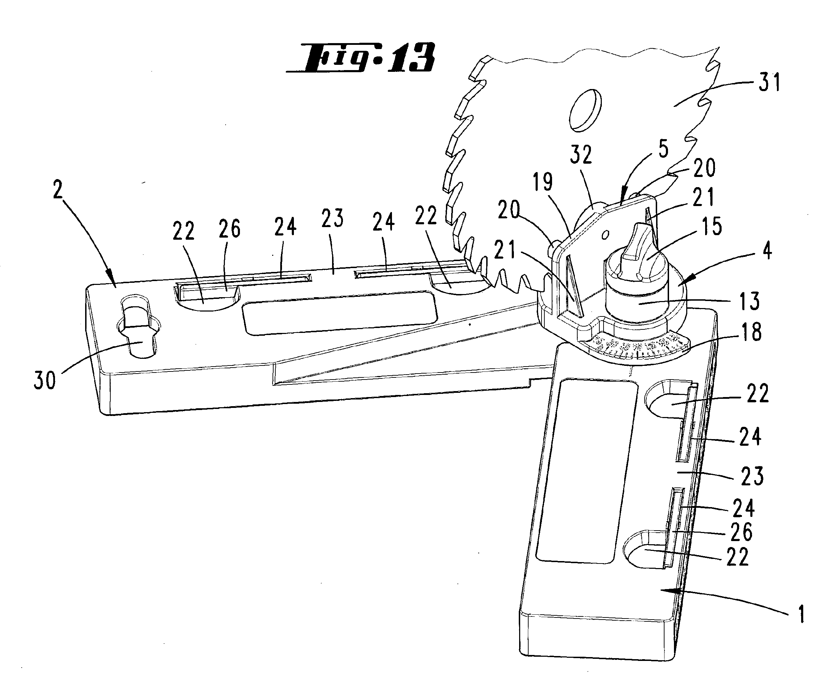

Die Fig. 13 zeigt einen Anwendungsfall, der einen Aspekt der Erfindung betrifft. Die Breitseitenfläche des Magneten 17 bildet zusammen mit den Stirnflächen der Sockel 20 eine Bezugsebene, die in der Winkelhalbierenden des Winkels liegt, den die beiden Schenkel 1, 2 zueinander einnehmen. Wegen der Getriebeübertragung liegt der Ausrichter 5 immer in einer derartigen Winkelhalbierenden. Wird die Schmiege mit Hilfe des Magneten 17, wie es in der Fig. 3 gezeigt ist, an die Breitseitenfläche eines Kreissägeblattes 31 einer Kappsäge angeheftet, so verlaufen die Randkanten der Schenkel 1, 2 im Wesentlichen spiegelsymmetrisch zur Schnittrichtung des Sägeblatts 31. Wesentlich ist, dass der Winkel einer jeden äußeren Randkante eines der Schenkel 1, 2 in Bezug auf die Schnittrichtung derselbe ist, so dass sich mit der Schmiege in einfacher Weise Gehrungsschnittlinien anreißen lassen bzw. Kappsägen einstellen lassen.

Eine Kappsäge besitzt in bekannter Weise einen Längsanschlag für das Werkstück. Der Schnittwinkel wird von der Drehstellung des Sägeblattes in Bezug auf den Längsanschlag bestimmt. Die erfindungsgemäße Schmiege dient der Vereinfachung des Schwenkeinstellens der Kappsäge. Anhand der Skala oder durch Abnahme des Winkels an zwei in einem Winkel zueinander stehenden Werkstücken werden die Schenkel 1, 2 in eine bestimmte Winkelstellung gebracht und dort fixiert. Sodann wird die Schmiege mittels des Magneten 17 an das Sägeblatt einer Kappsäge geheftet. Der Schwenktisch der Säge wird dann so lange gedreht, bis der jeweilige Schenkel 1, 2 parallel zum Längsanschlag liegt.

Mit der erfindungsgemäßen Schmiege lassen sich nicht nur Kappsägen mit einer Kreissäge, sondern auch beliebig anders gestaltete Gehrungssägen einstellen.

## Patentansprüche

1. Schmiege mit zwei zueinander in eine frei wählbare Winkelstellung verschwenkbaren, je eine Auflagefläche (1', 2') aufweisenden Schenkeln (1, 2) wobei im Gelenkbereich der beiden Schenkel (1, 2) ein Ausrichter (5) vorhanden ist, der sich zufolge einer Getriebeübertragung beim Schwenken der Schenkel (1, 2) in Richtung einer Winkelhalbierenden zum Schenkelwinkel ausrichtet und wobei weiterhin ein im Wesentlichen senkrecht zu den Auflageflächen (1', 2') abragender Steg (19) des Ausrichters (5) vorhanden ist, **dadurch gekennzeichnet, dass** der Steg (19) einen Magneten (17) und ihm benachbarte Sockel (20) aufweist, deren Stirnflächen, einen definierten Abstand zur Breitseitenwandung des Steges (19) aufweisend, eine Bezugsebene zum Anheften eines Sägeblatts einer Kappsäge ausbildet.

2. Schmiege nach Anspruch 1, **gekennzeichnet durch** eine Feststellvorrichtung (11,12,14,15), mit der die Winkelstellung der beiden Schenkel (1, 2) fixierbar ist.

3. Schmiege nach Anspruch 2, **dadurch gekennzeichnet, dass** die Feststellvorrichtung (11,12,14,15) einer Lagerachse (9) zugeordnet ist.

4. Schmiege nach einem der vorhergehenden Ansprüche 2 oder 3, **dadurch gekennzeichnet, dass** die Feststellvorrichtung eine Klemmschraube (11) aufweist, um die ein Schenkel (1) schwenkbar ist.

5. Schmiege nach einem oder mehreren der vorhergehenden Ansprüche, wobei der Ausrichter (5) einen Lagerträger (3,4) mit zugeordneten Lagerachsen (9, 10) aufweist, wobei der Lagerträger ein einen zwei Achsstummel (9,9') aufweisendes Basisteil (3) und ein den Anzeiger tragendes Oberteil (4) aufweist.

6. Schmiege nach Anspruch 5, **gekennzeichnet durch** eine dem Oberteil (4) zugeordnete Skala.

7. Schmiege nach einem der vorhergehenden Ansprüche 2 bis 6, **dadurch gekennzeichnet, dass** die Feststellvorrichtung einen Sockel (14) aufweist mit einer zum Achsstummel (9) fluchtenden Bohrung, die von einer Spannschraube (11) durchsetzt ist, die in ein Gewindeteil (12) eingeschraubt ist und deren Kopf (11') klemmend mit der Stirnfläche des Sockels (14) zusammenwirkt.

8. Schmiege nach Anspruch 7, **gekennzeichnet durch** eine mit dem Schraubenkopf (11') der Spannschraube (11) zusammenwirkende Griffhandhabe (15).

9. Schmiege nach einem der vorhergehenden Ansprüche, **gekennzeichnet durch** eine Anschlagleiste (26), die in einer Aussparung (24) eines Schenkels (1, 2) einliegt, und die aus einer Auflagefläche (1', 2') des Schenkels (1, 2) ausfahrbar ist.

10. Schmiege nach Anspruch 9, **dadurch gekennzeichnet, dass** die Anschlagleiste (26) von einer in eine Rastausnehmung (29) eingreifenden Rastnase (28) in der eingefahrenen bzw. in der ausgefahrenen Stellung gehalten ist.

11. Schmiege nach einem der vorhergehenden Ansprüche , **dadurch gekennzeichnet, dass** die Schenkel (1, 2) in einem Winkelbereich von 15 bis 180° verschwenkbar sind.

12. Schmiege nach einem der vorhergehenden Ansprüche, **dadurch gekennzeichnet, dass** der Magnet (17) in einer topfförmigen Aussparung (16) befestigt ist.

## Claims

1. Bevel gauge comprising two legs (1, 2) which are pivotable relative to one another into a freely selectable angular position and which each comprise a bearing surface (1', 2'), an aligning element (5) being provided in the joint region of the two legs (1, 2) and being oriented in the direction of an angle bisector of the leg angle as a result of a gear transmission when the legs (1, 2) pivot, and a ridge (19) of the alignment element (5) also being provided and projecting substantially perpendicularly to the bearing surfaces (1', 2'), **characterised in that** the ridge (19) comprises a magnet (17) and sockets (20) adjacent thereto, the front faces of which are at a defined distance from the broad side wall of the ridge (19) and form a reference plane for attaching a saw blade of a chop saw.

2. Bevel gauge according to claim 1, **characterised by** a locking device (11, 12, 14, 15) by means of which the angular position of the two legs (1, 2) can be fixed.

3. Bevel gauge according to claim 2, **characterised in that** the locking device (11, 12, 14, 15) is allocated to a bearing pin (9).

4. Bevel gauge according to either preceding claim 2 or claim 3, **characterised in that** the locking device comprises an adjusting screw (11), about which a leg (1) can pivot.

5. Bevel gauge according to one or more of the preceding claims, wherein the aligning element (5) comprises a bearing support (3, 4) having associated bearing pins (9, 10), wherein the bearing support comprises a base element (3) having two bearing journals (9, 9'), and an upper portion (4) supporting the indicating device.

6. Bevel gauge according to claim 5, **characterised by** a scale assigned to the upper portion (4).

7. Bevel gauge according to any of the preceding claims 2 to 6, **characterised in that** the locking device comprises a socket (14) having a drill hole opening which is aligned with the bearing journal (9) and which is penetrated by a clamping screw (11) which is screwed into a threaded portion (12) and the head (11') of which interacts with the front face of the socket (14) in a clamping manner.

8. Bevel gauge according to claim 7, **characterised by** a gripping handle (15) which interacts with the screw head (11') of the clamping screw (11).

9. Bevel gauge according to any of the preceding claims, **characterised by** a stop strip (26) which lies in a recess (24) in a leg (1, 2) and which can be extended out of a bearing surface (1', 2') of the leg (1, 2).

10. Bevel gauge according to claim 9, **characterised in that** the stop strip (26) is held in the retracted or extended position by a catch lug (28) which engages in a catch recess (29).

11. Bevel gauge according to any of the preceding claims, **characterised in that** the legs (1, 2) can pivot in an angular range of between 15 and 180°.

12. Bevel gauge according to any of the preceding claims, **characterised in that** the magnet (17) is fastened in a pot-shaped recess (16).

## Revendications

1. Équerre ayant deux branches (1, 2) pouvant pivoter l'une vers l'autre dans une position d'angle pouvant être choisie librement et présentant chacune une surface de support (1', 2'), dans laquelle il est prévu, dans la zone d'articulation des deux branches (1, 2), un aligneur (5) qui s'oriente vers l'angle des branches à la suite d'une transmission à engrenage lors du pivotement des branches (1, 2) dans la direction d'une bissectrice et dans laquelle il est en outre prévu une bride (19) de l'aligneur (5) s'élevant essentiellement à la verticale par rapport à la surface de support (1', 2'), **caractérisée en ce que** la bride (19) présente un aimant (17) et un socle (20) adjacent à celui-ci, dont la surface frontale, qui présente une distance définie par rapport à la paroi du côté de la largeur de la bride (19), forme un plan de référence pour fixer une lame de scie d'une scie à tronçonner.

2. Équerre selon la revendication 1, **caractérisée par** un dispositif de fixation (11, 12, 14, 15) au moyen duquel la position d'angle des deux branche (1, 2) peut être bloquée.

3. Équerre selon la revendication 2, **caractérisée en ce que** le dispositif de fixation (11, 12, 14, 15) est adjoint à un axe de palier (9).

4. Équerre selon l'une des revendications 2 ou 3 précédentes, **caractérisée en ce que** le dispositif de fixation présente une vis de serrage (11) autour de laquelle une branche (1) peut pivoter.

5. Équerre selon l'une ou plusieurs des revendications précédentes, dans laquelle l'aligneur (5) présente un support de palier (3, 4) présentant des axes de palier (9, 10) qui y sont adjoints, le support de palier présentant une partie de base (3) comprenant deux bouts d'axe (9, 9') et une partie supérieure (4) supportant l'indicateur.

6. Équerre selon la revendication 5, **caractérisée par** une graduation adjointe à la partie supérieure (4).

7. Équerre selon l'une des revendications 2 à 6 précédentes, **caractérisée en ce que** le dispositif de fixation présente un socle (14) avec un forage en affleurement avec le bout d'axe (9), dans lequel forage est insérée une vis de serrage (11) qui est vissée dans une partie de filetage (12) et dont la tête (11') coopère avec la surface frontale du socle (14) pour réaliser un serrage.

8. Équerre selon la revendication 7, **caractérisée par** une poignée (15) coopérant avec la tête de vis (11') de la vis de serrage (11).

9. Équerre selon l'une des revendications précédentes, **caractérisée par** une barrette de butée (26) qui repose dans un évidement (24) d'une branche (1, 2) et qui peut être déployée à partir d'une surface de support (1', 2') de la branche (1, 2).

10. Équerre selon la revendication 9, **caractérisée en ce que** la barrette de butée (26) est maintenue dans la position rétractée ou dans la position déployée par un ergot d'encliquetage (28) s'engageant dans un évidement d'encliquetage (29).

11. Équerre selon l'une des revendications précédentes, **caractérisée en ce que** les branches (1, 2) peuvent pivoter dans une zone d'angle de 15 à 180°.

12. Équerre selon l'une des revendications précédentes, **caractérisée en ce que** l'aimant (17) est fixé dans un évidement en forme de pot (16).
